(19) **Europäisches Patentamt**

**European Patent Office**

**Office européen des brevets**

(11) **EP 1 207 174 B1**

(12) **EUROPEAN PATENT SPECIFICATION**

(45) Date of publication and mention
of the grant of the patent:
**05.07.2006 Bulletin 2006/27**

(51) Int Cl.:
***C08G 18/10*** *(2006.01)*    ***C08G 18/62*** *(2006.01)*
***C09D 175/04*** *(2006.01)*

(21) Application number: **01304682.6**

(22) Date of filing: **30.05.2001**

(54) **Process for producing weather resistant coating film**

Verfahren zur Herstellung einer wetterfesten Beschichtung

Procédé pour la préparation d'un film de revêtement résistant aux intempéries

(84) Designated Contracting States:
**AT BE CH CY DE DK ES FI FR GB GR IE IT LI LU MC NL PT SE TR**

(30) Priority: **15.11.2000 JP 2000348232**

(43) Date of publication of application:
**22.05.2002 Bulletin 2002/21**

(73) Proprietor: **Taisei Chemical Industries Ltd Tokyo (JP)**

(72) Inventors:
• **Yamazaki, Takayoshi**
  **Omiya-shi,**
  **Saitama (JP)**
• **Sunamori, Takashi**
  **Funabashi-shi,**
  **Chiba (JP)**

(74) Representative: **Keen, Celia Mary**
  **J.A. Kemp & Co.**
  **14 South Square**
  **Gray's Inn**
  **London WC1R 5JJ (GB)**

(56) References cited:
**EP-A- 0 337 744**      **EP-A- 0 806 463**
**EP-A- 0 979 836**      **US-A- 4 096 128**
**US-A- 4 387 194**

**Description**

BACKGROUND OF THE INVENTION

This invention relates to a process for producing a coating film which can be used as protective coatings for houstop water-proofing, architectures such as floors and external walls of buildings, building materials, sports facilities such as tennis courts and athletic sports stadiums, as well as structures for display installed outdoors, such as road-signs, automobiles, domestic electric appliances, wood works, plastics moldings and printed matters, and further as surface coating materials for substances unstable to light and has excellent weather resistances required for long-term outdoor use such as gloss retainability, resistance to discoloration and resistance to cracking, and also to a coating material which can give the above-mentioned film.

As to a method for improving the weather resistance of coating materials, there have hitherto been known two-component coating compositions containing a compound having an ultraviolet absorbing ability (hereinafter referred to as ultraviolet absorptive compound) incorporated into the composition. Such coating compositions are excellent in weather resistance and, since they are of two-component system, can form coating film excellent in such physical properties as adhesiveness and coating film strength; so that they have been used as top coat for housetop water-proofing and external walls of buildings, building materials, sports facilities, and the like.

In particular, when an acrylic polyol is used as the binder of the coating material and an isocyanate prepolymer is used as the curing agent thereof, the resulting coating composition can form a coating film excellent in weather resistance, gloss, chemical property and mechanical strength, and has been generally used as a coating material for outdoor use. However, the above-mentioned coating composition has a shortcoming in that when the coating film obtained is used for a long period, a bleeding phenomenon, wherein the ultraviolet absorptive compound bleeds out to the surface, occurs and hence the beneficial effect of the compound does not last long.

To overcome the above-mentioned shortcoming, some attempts have been made to fix the ultraviolet absorptive compound into the coating composition, and a method has been proposed wherein a polymerizable ultraviolet absorptive compound is polymerized in an acrylic polyol (JP-A-9-3393).

As to the curing agent, further, a coating composition incorporated with a product obtained by bonding an ultraviolet absorptive compound into an isocyanate has been disclosed (JP-B-47-29199).

EP-A-0979836 is concerned with a paint composition comprising an isocyanate compound, which has a functional group with ultraviolet absorbability on a side chain, and a polymeric compound having an active hydrogen, which is preferably an acrylic polyol.

EP-A-0806463 relates to a coating composition comprising a vinyl resin having a structure of 2-(2'-hydroxyphenyl)-benzotriazole in the resin skeleton and a cross-linking agent.

With regard to the ultraviolet absorptive compound in the coating material, however, attention has been attracted only to the amount of the compound incorporated into the coating material, and much remains unknown with respect to the relation of the ultraviolet absorbing abilities of the ultraviolet absorptive compound as molecular extinction coefficient and absorbing wavelength region with the weather resistance and the relation between the amount of the ultraviolet absorptive compound present in the coating film after coating and the weather resistance. Thus, though it is already known that the use of an expensive ultraviolet absorptive compound is effective, it is still unclear how to make efficient use of such a compound, and no suggestion has yet been made of a design technique which can control the weather resistance as desired.

SUMMARY OF THE INVENTION

The object of this invention is to provide a process for producing a coating composition excellent in long-term weather resistances including gloss retainability and resistance to discoloration in long period outdoor use which comprises, in a two-component curable coating material, chemically bonding, an ultraviolet absorptive compound to the binder or the curing agent such that its ultraviolet absorbing ability is not impaired, to make the dry coating film after coating contain a specified amount of the compound. For this purpose, in this invention, the relation between the amount of an ultraviolet absorptive compound used and the weather resistance is examined, from which a design technique for obtaining weather resistance which meets the performance requirements of the coating material is obtained, and the above-mentioned process can be provided based on the design technique.

The present inventors have made extensive study on a process for producing a coating composition which can retain good weather resistance for a long period. As a result, the inventors have found out conditions for minimizing ultraviolet degradation by incorporating into a coating composition a product obtained by chemically bonding an ultraviolet absorptive compound to a binder or a curing agent so as to make the dry coating film after coating contain a specified amount of the compound, and resultantly succeeded in obtaining a coating film excellent in weather resistance. This invention has been thus accomplished.

According to this invention, there is a process for producing a weather resistant coating film having a gloss retention of at least 80% for at least τ hours in an accelerated weathering test by a carbon sunshine weather-o-meter, wherein τ is at least 1,000 hours; the process comprising the steps of:

(1) chemically bonding, to either or each of a binder and a curing agent an ultraviolet absorptive compound having the maximum value of its light absorption spectrum in a wavelength region shorter than 380 nm and having a molecular extinction coefficient at the absorption maximum wavelength of 5,000 to 50,000;
(2) determining the value of τ required by the intended use of the coating film;
(3) determining the required value of d, the thickness (cm) of the dry coating film when in use;
(4) determining the concentration C (mol/L) of the functional group of the ultraviolet absorptive compound to be present in the dry coating film by using the expression

$$\varepsilon dC \geq 129 \cdot \log \tau - 367$$

wherein e is the molecular extinction coefficient of the functional group in the dry coating film, τ is as determined in step (2) and d is as determined in step (3);
(5) preparing a weather resistant coating material comprising the binder and the curing agent as main constituents and comprising the product of step (1) in an amount to provide the value of C determined in step (4); and
(6) coating an article with the coating material and drying the coating material so as to produce a dry coating film of thickness d.

BRIEF DESCRIPTION OF THE DRAWING

Fig. 1 is a graph showing the ultraviolet transmittance of each coating film.
Fig. 2 shows the absorption spectrum of a functional group residue having ultraviolet absorbing ability.
Fig. 3 is a graph showing a relation between the amount of the functional group of an ultraviolet absorptive compound and the absorbance.
Fig. 4 is a graph showing a relation between absorbance and gloss retention.
Fig. 5 is a graph showing a relation between the amount of a functional group and gloss retention.
Fig. 6 is a graph showing a relation between absorbance and gloss retention.
Fig. 7 is a graph showing a relation between the amount of the functional group residue having ultraviolet absorbing ability in the coating film and the gloss retention.
Fig. 8 is a graph showing a relation between absorbance and weather resistance.
Fig. 9 is a graph showing a relation among the concentration and the molecular extinction coefficient of an ultraviolet absorptive compound residual group in the coating film, the thickness of dry coating film and the exposure time.

DETAILED DESCRIPTION OF THE INVENTION

This invention is described in detail below.
In this invention, the ultraviolet absorptive compound having the maximum value of its light absorption spectrum in a wavelength region shorter than 380 nm and having a molecular extinction coefficient at the absorption maximum wavelength of 5,000 to 50,000 (said compound being hereinafter referred to simply as ultraviolet absorptive compound) is used singly or in a combination of two or more thereof and is bonded into the binder or the curing agent such that the ultraviolet absorbing ability of the ultraviolet absorptive compound may not be impaired, in other words, the compound may be bonded, through its group or moiety other than that having the ultraviolet absorbing ability, into the binder or the curing agent, and the group or moiety having the ultraviolet absorbing ability may remain unreacted or unchanged. In this invention, further, the amount of the ultraviolet absorptive compound to be bonded is determined such that when the coating material is coated and dried the concentration C (mol/L) of the ultraviolet absorptive compound residual group in the dry coating film may satisfy the above-mentioned expression, and the constitution of the coating material, that is, the compounding amounts of the binder and the curing agent to which the ultraviolet absorptive compound has been bonded, is determined so as to satisfy the above-mentioned expression.
The ultraviolet absorptive compound used in this invention may be, for example, an ultraviolet absorptive compound having an active hydrogen and an ultraviolet absorptive compound having a polymerizable vinyl group.
The ultraviolet absorptive compound having an active hydrogen may be, for example, benzotriazole type compounds having an active hydrogen, such as 2-(2'-hydroxy-5'-methylphenyl)benzotriazole, 2-(2'-hydroxy-5'-t-butylphenyl) benzotriazole, 2-(2'-hydroxy-3'-t-butyl-5'-methylphenyl)-5-chlorobenzotriazole and 2-(2'-hydroxy-4'-octoxyphenyl)benzotriazole; and benzophenone type compounds having an active hydrogen, such as 2-hydroxy-4-octoxybenzophenone, 2-hydroxy-4-ethoxybenzophenone, 2-hydroxy-4-methoxybenzophenone, 2-hydroxy-4-octoxy-2'-chloro-benzophenone and 2-hydroxy-4-octoxy-3'-methyl-benzophenone; used each alone or in a combination thereof.

The ultraviolet absorptive compound having a polymerizable vinyl group may be, for example, benzotriazole type compounds having a vinyl group, such as 2-[2'-hydroxy-5'-(methacryloyloxymethyl)phenyl]-2H-benzotriazole, 2-[2'-hydroxy-5'-(methacryloyloxyethyl)-phenyl]-2H-benzotriazole, 2-[2'-hydroxy-5'-t-butyl-3'-(methacryloyloxyethyl)phenyl]-2H-benzotriazole and 2-[2'-hydroxy-5'-(methacryloyloxyethyl)phenyl]-5-chloro-2H-benzotriazole) and benzophenone type compounds having a vinyl group, such as 2-hydroxy-4-(3-acryloxy-2-hydroxypropoxy)benzophenone, 2-hydroxy-4-(3-methacryloxy-2-hydroxypropoxy)benzophenone and 2'-dihydroxy-4-(3-methacryloxy-2-hydroxypropoxybenzophenone; used each alone or in a combination thereof.

For chemically bonding the ultraviolet absorptive compound to the binder or the curing agent in the coating material, it is preferable to polymerize an ultraviolet absorptive compound having a polymerizable vinyl group with another monomer and/or prepolymer each having a polymerizable vinyl group, or to make an ultraviolet absorptive compound having an active hydrogen react on an isocyanate prepolymer and/or isocyanate monomer each having at least two free isocyanate groups. By chemically bonding the ultraviolet absorptive compound to the binder or the curing agent in the coating material, coating film excellent in weather resistance can be provided. The most preferable method in using a binder or a curing agent to which an ultraviolet absorptive compound has been bonded is to use an acrylic polyol as the binder and, at the same time, to use a nonyellowing isocyanate as the curing agent.

More specifically, the ultraviolet absorptive compound having a polymerizable vinyl group, which is a constituent of the acrylic polyol (binder) to which the above-mentioned ultraviolet absorptive compound has been bonded, may be, for example, a benzotriazole type compound having a vinyl group, such as 2-[2'-hydroxy-5'-(methacryloyloxymethyl) phenyl]-2H-benzotriazole, 2-[2'-hydroxy-5'-(methacryloyloxyethyl)phenyl]-2H-benzotriazole, 2-[2'-hyroxy-5'-t-butyl-3'-(methacryloyloxyethyl)phenyl]-2H-benzotriazole and 2-[2'-hydroxy-5'-(methacryloyloxyethyl)phenyl]-5-chloro-2H-benzotriazole; and a benzophenone type compound having a vinyl group, such as 2-hydroxy-4-(3-acryloxy-2-hydroxypropoxy)benzophenone, 2-hydroxy-4-(3-methacryloxy-2-hydroxypropoxy)benzophenone and 2'-dihydroxy-4-(3-methacryloxy-2-hydroxypropoxybenzophenone; used each alone or in a combination thereof.

The unsaturated monomer component having a hydroxyl group which serves as another constituent may be, for example, hydroxyethyl (meth)acrylate, hydroxypropyl (meth)acrylate and caprolactone-modified hydroxy (meth)acrylate, used each alone or in a combination thereof.

Another polymerizable monomer which is another constituent may be, for example, cyclohexyl(meth)acrylate, methylcyclohexyl acrylate, t-butylcyclohexyl(meth)acrylate, methyl(meth)acrylate, ethyl(meth)acrylate, propyl(meth)acrylate, isopropyl (meth)acrylate, butyl(meth)acrylate, isobutyl(meth)-acrylate, sec-butyl(meth)acrylate, t-butyl (meth)-acrylate, isopentyl(meth)acrylate, neopentyl(meth)-acrylate, hexyl(meth)acrylate, heptyl(meth)acrylate, octyl(meth)acrylate, 2-ethylhexyl(meth)acrylate, stearyl(meth)acrylate, benzyl(meth) acrylate, dimethylaminomethyl acrylate, diethylaminomethyl acrylate, dibutylaminomethyl acrylate, dihexylaminomethyl acrylate, styrene, $\alpha$-methylstyrene, vinyltoluene, vinylidene chloride, vinyl acetate, acrylic acid, maleic acid, itaconic acid, 2-acryloyloxyethylsuccinic acid and 2-acryloyloxyethylphthalic acid, used each alone or in a combination thereof.

As other constituents, there may be used, if necessary and desired, a light stabilizer, such as 4-(meth)acryloyloxy-2,2,6,6-tetramethylpiperidine, 4-(meth)acryloylamino-2,2,6,6-tetramethylpiperidine, 4-(meth)acryloyloxy-1,2,2,6,6-pentamethylpiperidine, and 4-(meth)acryloylamino-1,2,2,6,6-pentamethylpiperidine, each alone or in a combination thereof.

The method of polymerization used in copolymerizing the monomer composition comprising the above-mentioned constituents for preparing the binder is not particularly limited, but it is preferably solution polymerization.

The solvent used in the copolymerization may be, for example, aromatic hydrocarbons, such as toluene and xylene; ketones, such as acetone, methyl ethyl ketone and methyl isobutyl ketone; esters, such as ethyl acetate and butyl acetate; cellosolve acetate and propylene glycol monomethyl ether acetate; used each alone or in a combination thereof.

A polymerization initiator is used in copolymerizing the monomer composition. Polymerization initiators generally used are, for example, those of azo type, such as azobisisobutyronitrile, and those of peroxide type, such as benzoyl peroxide; which may be used each alone or in a combination thereof.

The ultraviolet absorptive compound having an active hydrogen which is a constituent of the curing agent to which the above-mentioned ultraviolet absorptive compound has been bonded may be, for example, a benzotriazole type compound, such as 2-(2'-hydroxy-5'-methylphenyl)benzotriazole, 2-(2'-hydroxy-5'-t-butylphenyl)benzotriazole, 2-(2'-hydroxy-3'-t-butyl-5'-methylphenyl)-5-chlorobenzotriazole and 2-(2'-hydroxy-4'-octoxyphenyl)benzotriazole; and a benzophenone type compound, such as 2-hydroxy-4-octoxybenzophenone, 2-hydroxy-4-ethoxybenzophenone, 2-hydroxy-4-methoxybenzophenone, 2-hydroxy-4-octoxy-2'-chlorobenzophenone and 2-hydroxy-4-octoxy-3'-methylbenzophenone; used each alone or in a combination thereof.

The isocyanate compound used as another constituent may be, for example, nonyellowing isocyanates, such as hexamethylene diisocyanate, isophorone diisocyanate and cyclohexylmethane diisocyanate; their isocyanurates, biurets and trimelthylolpropane adducts; and the adducts thereof with compounds having an active hydrogen, such as amines, carboxylic acids, alcohols, and the derivatives thereof. They may be used each alone or in a combination thereof.

In reacting the isocyanate compound with the ultraviolet absorptive compound containing an active hydrogen, there may be added to these constituents a compound having an active hydrogen, e.g., amines, carboxylic acids, alcohols, and the derivatives thereof, each alone or in a combination thereof, whereby the chemical characteristics and the physical characteristics can be controlled as desired.

The solvents which may be used in reacting the ultraviolet absorptive compound with the isocyanate are, for example, aromatic ones, such as toluene and xylene, ketones, such as acetone, methyl ethyl ketone and methyl isobutyl ketone, esters, such as ethyl acetate, butyl acetate and isobutyl acetate, cellosolve acetate and propylene glycol monomethyl ether acetate; these may be used either singly or in a combination thereof. The use of solvents containing an active hydrogen, e.g., alcohols, should be avoided because such solvents react with isocyanates.

Urethane reaction catalysts may also be used to promote reaction. Such catalysts include, for example, organometallic catalysts, such as dibutyltin diacetate and dibutyltin dilaurate, and amine type catalysts, such as 1,4-diazabicyclo-(2,2,2)octane, triethylamine, N,N,N',N'-tetramethylethylenediamine, triethylenediamine and dimethylaminoethanol. They may be used each alone or in a combination thereof.

Further, according to necessity, any desired isocyanate prepolymer may be mixed, examples of which include isocyanate monomers, such as hexamethylene diisocyanate and isophorone diisocyanate, isocyanurates, biurets, and adducts with a compound having an active hydrogen, such as amines, carboxylic acids, alcohols and the derivatives thereof; they may be used each alone or in a combination thereof.

The method of reaction is not particularly limited, and the reaction may be conducted according to conventional techniques. However, attention should be paid to conduct the reaction preferably by a method which avoids the presence of water. For example, the use of a urethane-grade solvent or the use of a desiccant is advisable. The desiccant which may be used is, for example, tosyl isocyanate, molecular sieve, etc. For obtaining a coating material particularly excellent in weather resistance and physical property in this invention, it is preferable to use isocyanurates or biurets of hexamethylene diisocyanate. In reacting the ultraviolet absorber with an isocyanate compound, it is preferable to design the reaction such that, on an average, two or more isocyanate groups per molecule remain in the isocyanate composition. When the number of the group is less than two on an average, in the succeeding reaction with the curing agent component the crosslinking tends to be insufficient, leading to unsatisfactory physical properties of the resulting coating material.

The coating material according to this invention may contain, according to necessity, a promoter for reaction with isocyanates, organic solvent, additive, inorganic pigment, organic pigment and body pigment. The reaction promoter may be, for example, organometallic catalysts, such as butyltin diacetate and dibutyltin dilaurate, and amine type catalysts, such as 1,4-diazabicyclo(2,2,2)octane, triethylamine, N,N,N',N'-tetramethylethylenediamine, triethylene-diamine and dimethylaminoethanol, used each alone or in a combination thereof.

The organic solvent may be, for example, aromatic solvents, such as toluene and xylene; ketones, such as acetone, methyl ethyl ketone and methyl isobutyl ketone; esters, such as ethyl acetate and butyl acetate; cellosolve acetate and propylene glycol monomethyl ether acetate, used each alone or in a combination thereof.

The additive may be various conventional additives for coating materials, for example, antifoaming agents, dispersants, leveling agents, adhesion improving agent, plasticizers, stabilizers and sedimentation preventing agents, used each alone or in a combination thereof. The inorganic pigment may be, for example, titanium oxide, zinc white, lead yellow, red oxide, yellow iron oxide, iron black and carbon black. The organic pigment may be, for example, azo type compounds and phthalocyanine type compounds. The body pigment may be, for example, calcium carbonate, silicon oxide, clay, organic bentonite and silica rock powder. These pigments may be used each alone or in a combination thereof.

In this invention, to attain a sufficient weather resistance of the coating material, the amount of the functional group of the ultraviolet absorptive compound to be used is determined according to the exposure time that shows a gloss retention of 80% or more which is required by the intended coating film thickness and intended use of the coating such that when the coating material is coated and dried the concentration C (mol/L) of the residual group of the compound in the dry film may satisfy the empirical expression

$$\varepsilon dC \geqq 129 \cdot \log \tau - 367$$

wherein $\varepsilon$ is the molecular extinction coefficient of the said compound residual group in the dry coating film, d is the thickness (cm) of the dry film when in use and $\tau$ is the exposure time (hr) in an accelerated weathering test that shows a gloss retention of 80% or more which is required according to the intended use, whereby the object can be achieved.

The article which may be coated by the above-mentioned coating composition is not particularly limited. Articles to be coated include, for example, plastics, such as urethane, FRP (fiber reinforced plastics), polypropylene, polycarbonate and acrylic resins, wood, metal, glass and ceramics. Further, the coating composition may be used for surface protection of such chemical substances as pigments having insufficient weather resistance, protection of printed ink surfaces and surface coating of paper. By applying the coating composition of this invention to the surface of these coated articles, the long-term weather resistance of the coated articles can be recurred.

Thus, the coating composition of this invention can be widely used as a coating material for plastics moldings, domestic electric appliances, metal goods, automobiles, acroplanes, buildings, building materials, sports facilities and wood works.

This invention is described in detail below with reference to Examples and other examples.

Referential Example 1 (Method of preparation of ultraviolet absorber-containing binder (acrylic polyol))

In a flask fitted with a stirrer, dropping funnel, cooling tube and thermometer were placed 10 parts by weight of butyl acetate and 10 parts by weight of xylene, then brought up to 120° C in nitrogen atmosphere, and a polymerizable monomer mixture placed in the dropping funnel in the following composition was added by drops thereto at a constant rate in 2 hours:

| | |
|---|---|
| cyclohexyl methacrylate | 25 parts by weight |
| methyl methacrylate | 6 parts by weight |
| butyl acrylate | 10 parts by weight |
| 2-hydroxyethyl methacrylate | 7 parts by weight |
| acrylic acid | 0.3 part by weight |
| 2-[2'-hydroxy-5'-(methacryloyl)phenyl]-benzotriazole | 8 parts by weight |
| methacryloylamino-2,2,6,6-tetramethylpiperidine | 0.5 part by weight |
| azobisisobutyronitrile | 1 part by weight |

One hour after completion of the dropwise addition, a mixed solution of 0.2 part by weight of azobisisobutyronitrile and 10 parts by weight of xylene was added by drops at a constant rate over 2 hours and, after completion of the dropwise addition, the resulting mixture was kept at 120° C for 1 hour. After cooling, the reaction mixture was diluted with 17.5 parts by weight of xylene to obtain an acrylic polyol (binder) having a viscosity of 30,000 mPa·s, nonvolatile matter content of 56.3% and weight average molecular weight of 31,000.

Referential Example 2

The same procedures as in Referential Example 1 were followed to conduct polymerization according to the following composition of polymerizable monomers.

| | |
|---|---|
| cyclohexyl methacrylate | 25 parts by weight |
| methyl methacrylate | 6 parts by weight |
| butyl acrylate | 10 parts by weight |
| 2-hydroxyethyl methacrylate | 7 parts by weight |
| acrylic acid | 0.3 part by weight |
| 2-[2'-hydroxy-5'-(methacryloyl)phenyl]benzotriazole | 5 parts by weight |
| methacryloylamino-2,2,6,6-tetramethylpiperidine | 0.5 part by weight |
| azobisisobutyronitrile | 1.2 part by weight |
| xylene | 37.5 parts by weight |
| butyl acetate | 10 parts by weight |

The acrylic polyol (binder) thus obtained had a viscosity of 13,100 mPa·s, nonvolatile matter content of 53.3% and weight average molecular weight of 32,000.

Control Examples 1 and 2

Acrylic polyols (binders) were obtained according to the compositions shown in Table 1 by following the same procedures as in Referential Example 1.

## Table 1  Composition and property of acrylic resin

| | Control Example | 1 | 2 |
|---|---|---|---|
| composition | Cyclohexyl methacrylate | 25 | 25 |
| | Methyl methacrylate | 6 | 6 |
| | Butyl acrylate | 10 | 10 |
| | 2-Hydroxyethyl methacryolate | 7 | 7 |
| | Acrylic acid | 0.3 | 0.3 |
| | 2-[2'-Hydroxy-5'-(methacryloyl)-phenyl]benzotriazole | | 0.5 |
| | Azobisisobutyronitrile | 1.2 | 1.2 |
| | Xylene | 35.5 | 35.5 |
| | Butyl acetate | 10 | 10 |
| property | Viscosity (mPa·s) | 2200 | 2350 |
| | Nonvolatile matter content (%) | 49 | 50 |
| | Molecular weight (weight average) | 30000 | 31000 |

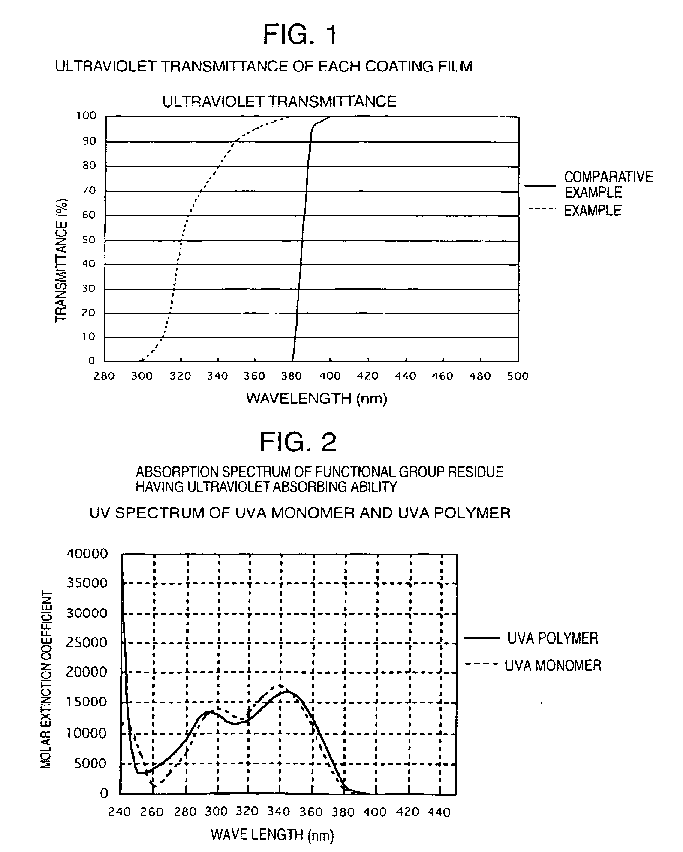

The acrylic polyol (binder) obtained in the Referential Example 1 and the acrylic polyol (binder) obtained in Control Example 1 were each formed into a coating film having a thickness of 100 $\mu$m after drying, which was then determined for its ultraviolet transmittance with an ultraviolet spectrophotometer. The results of the determination are shown in Fig. 1. Fig. 1 shows the ultraviolet transmittance of each coating film.

Further, the respective absorption spectra of the binder obtained in Referential Example 1 and the ultraviolet absorptive compound alone before bonding are shown in Fig. 2 each as a relation between the molecular extinction coefficient and the wavelength.

The determination was made as follows. For the binder, it was diluted with a spectrally unrelated resin (acrylic polyol described in Referential Example 1) to give a concentration of functional group residue, after bonding, in the coating film of 0.106 m mol/L and the absorbance was measured at a film thickness of 100 $\mu$m to obtain the molecular extinction coefficient. For the ultraviolet absorptive compound before bonding, determination was made by a solution method using a 1 cm cell at a concentration of 0.0619 m mol/L to obtain the molecular extinction coefficient in the same manner as above.

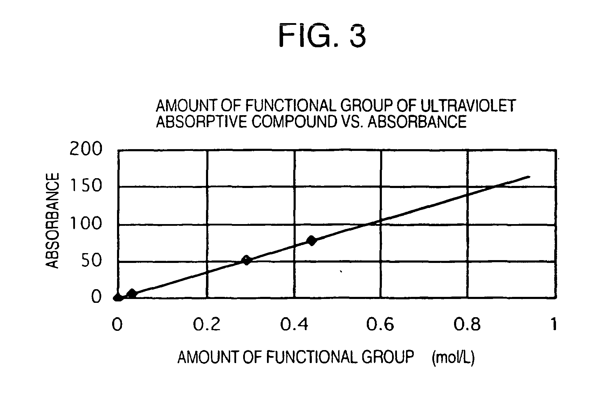

The binders obtained in Referential Examples 1 and 2 and the binders obtained in Control Examples 1 and 2 were each formed into a coating film having a thickness of 100 $\mu$m after drying, and the absorbances of the coating films were determined to examine the relation of the amount of the functional group of the ultraviolet absorptive compound per 1 cm$^2$ with the absorbance. When absorbance is designated A and transmittance is designated T, absorbance and transmittance are related by A = -logT. For absorbances of Referential Examples 1 and 2, determination was made with samples obtained by diluting the binders prepared in Referential Examples 1 and 2 with a binder having no ultraviolet absorbing ability to 20-fold dilution in terms of solid content, and the absorbances were obtained from the results of determination by calculation. The results thus obtained are shown in Table 2 and Fig. 3. Table 2 shows the relation of the amount of the functional group of the ultraviolet absorptive compound with the absorbance. Fig. 3 shows the relation of the amount of the functional group of the ultraviolet absorptive compound with the absorbance.

Table 2 Relation of amount of functional group of ultraviolet absorptive compound with absorbance

| Specimen | Referential Example 1 | Referential Example 2 | Control Example 1 | Control Example 2 |
|---|---|---|---|---|
| Amount of functional group of ultraviolet absorptive compound (mol/L) | 0.44 | 0.29 | 0 | 0.032 |
| Absorbance | 77 | 51 | 0 | 5.5 |

Referential Example 3 (Method of preparation of ultraviolet absorber-containing curing agent (isocyanate prepolymer))

In a flask fitted with a stirrer, cooling tube and thermometer were placed 24 parts by weight of butyl acetate, 12 parts by weight of hexamethylene diisocyanurate, 2 parts by weight of 2(2'-hydroxy-5'-methylphenyl)benzotriazle and 0.01 part by weight of dibutyltin dilaurate, then brought up to 70° C in nitrogen atmosphere and allowed to react for 3 hours. After the reaction mixture had been cooled to room temperature, 38 parts by weight of an isocyanate prepolymer (Acrit 8XA-012, a trade name, mfd. by TAISEI CHEMICAL INDUSTRIES, LTD.; nonvolatile matter content: 50%, isocyanate content: 3.1%) was added thereto to obtain an isocyanate prepolymer (curing agent) having a nonvolatile matter content of 43%, viscosity of 20 mPa·s and isocyanate group content of 4.3%.

Control Example 3

In a flask fitted with a stirrer, cooling tube and thermometer were stirred 24 parts by weight of butyl acetate and 12 parts by weight of hexamethylene diisocyanurate in nitrogen atmosphere at room temperature for 10 minutes, and 38 parts of an isocyanate prepolymer (Acrit 8XA-012) was added thereto to obtain a composition. Thus, an isocyanate prepolymer with a nonvolatile matter content of 42%, viscosity of 18 mPa·s and isocyanate group content of 5.1% was obtained.

Referential Example 4

Pigment dispersion was conducted by using a sand mill and by using the binder resins (acrylic polyols) obtained in Referential Examples 1 and 2 according to the following compositions, to obtain white coating materials.

| Mill base | |
|---|---|
| titanium oxide | 20 parts by weight |
| binder resin | 10 parts by weight |
| xylene | 5 parts by weight |
| total | 35 parts by weight |

| Let down | |
|---|---|
| mill base | 35 parts by weight |
| binder resin | 50 parts by weight |
| xylene | 15 parts by weight |
| total | 100 parts by weight |

Control Example 4

In the same manner as in Referential Example 4 except for using the resins prepared in Control Examples 1 and 2, white coating materials were obtained.

Examples 1 and 2, Comparative Examples 1 and 2

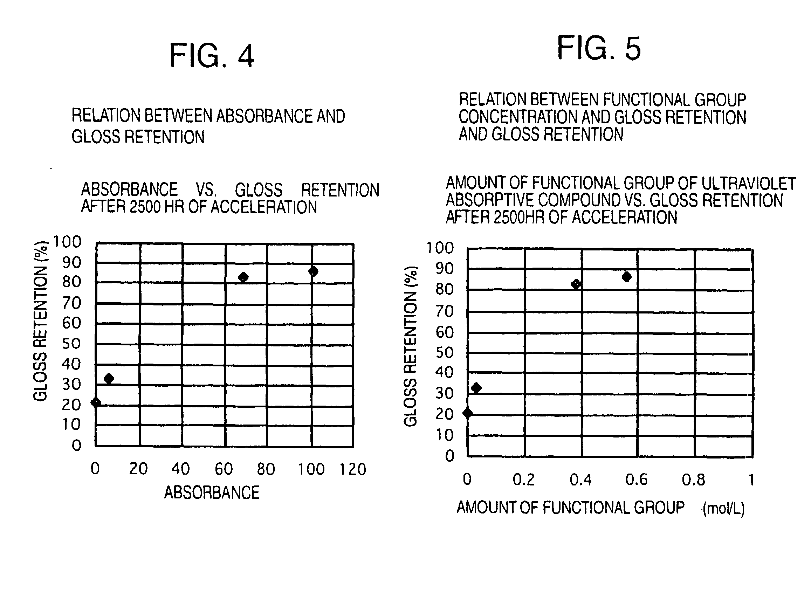

The white coating material of Referential Example 4 and the isocyanate prepolymer prepared in Referential Example 3, and the white coating material of Control Example 4 and the isocyanate prepolymers prepared in Control Example 3 were respectively compounded so as to give a ratio, NCO group/OH group, of 1/1. The resulting coating materials were each coated on an aluminum plate and dried to give a coating film having a thickness of 150 μm after drying, and subjected to an accelerated weathering test for 2500 hours in a carbon sunshine weather-o-meter to determine gloss retention and to examine, from the gloss retention of the respective coating material determined, the relation of absorbance with gloss retention and the relation of the amount of the functional group of the ultraviolet absorptive compound with gloss retention. The results thus obtained are shown in Table 3 and Figs. 4 and 5. Fig. 4 shows the relation of absorbance with gloss retention (1), and Fig. 5 shows the relation of the amount of functional group with gloss retention (1).

Table 3 Composition of coating material and result of test

| Specimen | Exam-ple 1 | Example 2 | Comparative Example 1 | Comparative Example 2 |
|---|---|---|---|---|
| Coating material obtained in Referential Example 4 (part by weight) (Resin is that of Referential Example 1) | 100 | | | |
| Coating material obtained in Referential Example 4 (part by weight) (Resin is that of Referential Example 2) | | 100 | | |
| Coating material obtained in Control Example 4 (part by weight) (Resin is that of Control Example 1) | | | 100 | |
| Coating material obtained in Comparative Example 4 (parts by weight) (Resin is that of Control Example 2) | | | | 100 |
| Isocyanate prepolymer obtained in Referential Example 3 (part by weight) | 31.4 | 31.4 | | |
| Isocyanate prepolymer obtained in Control Example 3 (part by weight) | | | 26.7 | 26.7 |
| Amount of functional group of ultraviolet absorptive compound (mol/L) | 0.56 | 0.38 | 0 | 0.032 |
| Absorbance (Value determined from Fig. 2) | 100.8 | 68.4 | 0 | 5.8 |
| Gloss retention after 2500 hrs of acceleration test in weather-ometer (%) | 86 | 83 | 21 | 33 |

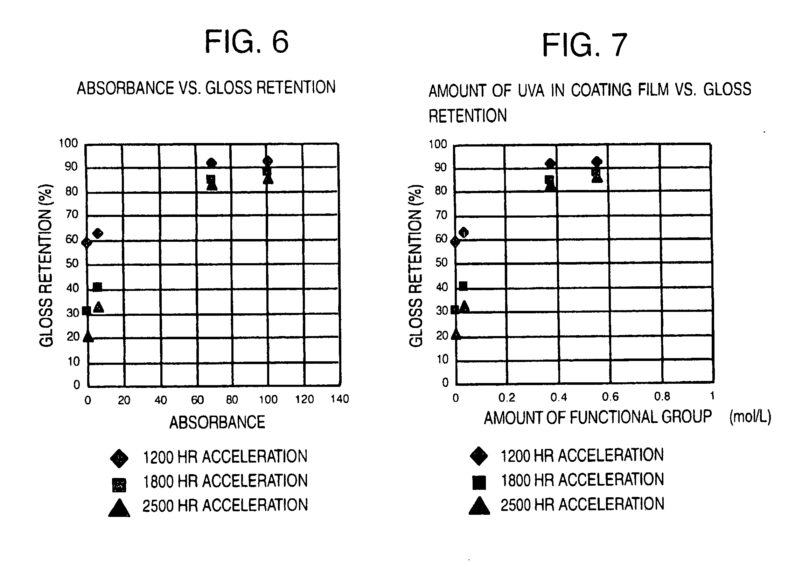

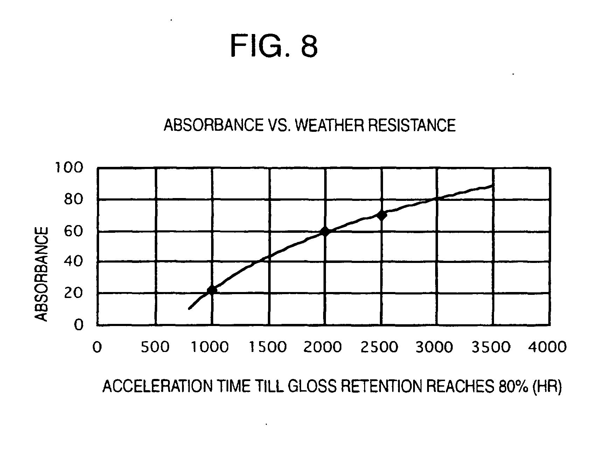

Next, based on the changes of gloss retention of respective coating materials, the points at which gloss retention reached 80% at respective absorbances and at respective amounts of the functional group of the ultraviolet absorptive compound were determined, from which the acceleration time at which gloss retention reaches 80% at any desired absorbance and at any desired amount of the functional group of the ultraviolet absorptive compound was determined. The results thus obtained are shown in Table 4 and Figs. 6-9. Fig. 6 is a graph showing the relation of absorbance with gloss retention (2), Fig. 7 is a graph showing the relation of the amount of functional group with gloss retention (2) and Fig. 8 is a graph showing the relation of absorbance with weather resistance.

Table 4 Change of gloss retention of each coating material

| Specimen | Absorbance | Amount of functional group of ultraviolet absorptive compound (mol/L) | Gloss retention (%) | | | | |
|---|---|---|---|---|---|---|---|
| | | | 500 hrs | 1000 hrs | 1500 hrs | 2000 hrs | 2500 hrs |
| Example 1 | 100.8 | 0.56 | 97 | 93 | 91 | 88 | 86 |
| Example 2 | 68.4 | 0.38 | 97 | 92 | 88 | 85 | 83 |
| Comparative Example 1 | 0 | 0 | 79 | 59 | 44 | 31 | 21 |
| Comparative Example 2 | 5.8 | 0.032 | 85 | 63 | 50 | 41 | 33 |

It can been seen that in the group wherein the coating composition obtained by the method of Example 1 is used the weather resistance is improved when the amount of the functional group of the ultraviolet absorptive compound is increased. It can be seen further that when the amount of functional group is 0.38 mol/L, a gloss retention of 80% can be maintained at an acceleration time of 2500 hours, and thus an excellent weather resistance is attained.

To obtain, from the relation shown in Fig. 8, an empirical rule for estimating the value of absorbance at which 80% gloss retention can be attained at an exposure time $\tau$ determined for intended purposes, the relation of $\varepsilon dC$, namely absorbance, with $\log \tau$ was plotted as a graph.

As a result, it has been revealed that the relation shows a good linearity and can be used as an empirical formula for determining C. Thus, the concentration C (mol/L) of the residual group of the ultraviolet absorptive compound to be present in the dry film when the coating material is coated and dried can be determined by the expression.

$$\varepsilon dC \geqq 129 \cdot \log \tau - 367$$

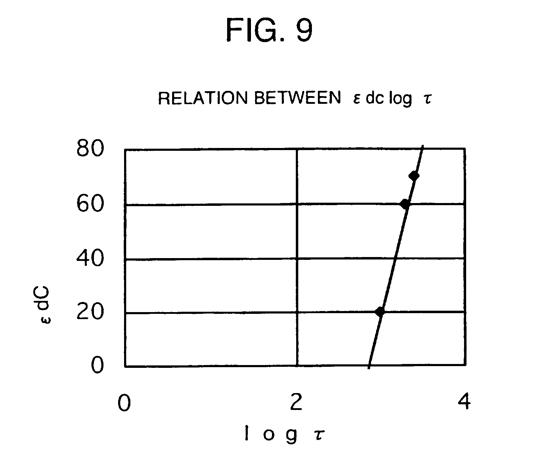

wherein $\varepsilon$ is the molecular extinction coefficient of the said compound residual group in the dry film, d is the thickness (cm) of the dry coating film when in use and $\tau$ is the exposure time (hr) in the accelerated weathering test that shows a gloss retention of 80% or more which is determined according to the requirements of intended uses. This expression is shown by Fig. 9.

According to this invention, coating film improved in long-term weather resistance can be obtained without causing deterioration of physical and chemical properties of the film by bonding an ultraviolet absorptive compound to the binder or the curing agent of the coating material skillfully so that the ultraviolet absorbing ability may not be impaired, thereby to make the dry coating film after drying contain a specific amount of a functional group having ultraviolet absorbing ability. This invention can be applied to such uses as coating materials and inks wherein great importance is attached to weather resistance.

According to this invention, the time during which a coating film maintain a gloss retention of 80% or more in an accelerated test by a carbon sunshine weather-o-meter can be easily lengthened according to the intended use; thus, for example, a long-term weather resistance of 2500 hours or more can be attained.

**Claims**

1. A process for producing a weather resistant coating film having a gloss retention of at least 80% for at least $\tau$ hours in an accelerated weathering test by a carbon sunshine weather-o-meter, wherein $\tau$ is at least 1,000 hours; the process comprising the steps of:

(1) chemically bonding, to either or each of a binder and a curing agent an ultraviolet absorptive compound having the maximum value of its light absorption spectrum in a wavelength region shorter than 380 nm and having a molecular extinction coefficient at the absorption maximum wavelength of 5,000 to 50,000;
(2) determining the value of $\tau$ required by the intended use of the coating film;
(3) determining the required value of d, the thickness (cm) of the dry coating film when in use;

(4) determining the concentration C (mol/L) of the functional group of the ultraviolet absorptive compound to be present in the dry coating film by using the expression

$$\varepsilon dC \geq 129 \bullet \log \tau - 367$$

wherein e is the molecular extinction coefficient of the functional group in the dry coating film, $\tau$ is as determined in step (2) and d is as determined in step (3);
(5) preparing a weather resistant coating material comprising the binder and the curing agent as main constituents and comprising the product of step (1) in an amount to provide the value of C determined in step (4); and
(6) coating an article with the coating material and drying the coating material so as to produce a dry coating film of thickness d.

2. A process according to claim 1 wherein the binder to which the ultraviolet absorptive compound has been bonded is a resin obtainable by copolymerizing an ultraviolet absorptive compound having a polymerizable vinyl group with a monomer having a polymerizable vinyl group.

3. A process according to claim 1 or 2 wherein the curing agent to which the ultraviolet absorptive compound has been bonded is a curing agent which comprises an isocyanate compound containing residual isocyanate groups obtainable by reacting an ultraviolet absorptive compound having an active hydrogen with part of the isocyanate groups of an isocyanate prepolymer and/or monomer having at least two free isocyanate groups, and further comprises, according to necessity, an isocyanate prepolymer.

4. A process according to any one of the preceding claims wherein the ultraviolet absorptive compound is at least one compound selected from the group consisting of benzotriazole type compounds and benzophenone type compounds.

5. A process according to any one of the precent claims wherein the article is selected from plastics mouldings, domestic electrical appliances, metal goods, automobiles, aeroplanes, building materials, sports equipment, buildings and building fittings, and wooden articles.

**Patentansprüche**

1. Verfahren zur Herstellung eines witterungsbeständigen Beschichtungsfilms mit einer Glanzerhaltung von mindestens 80 % während mindestens $\tau$ Stunden in einem beschleunigten Bewitterungstest durch ein Kohlebogen-Sonnenlicht-Weather-o-Meter, wobei $\tau$ mindestens 1000 h beträgt, wobei das Verfahren folgende Stufen umfasst:

(1) chemisches Binden einer im Ultraviolettbereich absorbierenden Verbindung mit einem Maximalwert von dessen Lichtabsorptionsspektrum in einem Wellenlängenbereich von kürzer als 380 nm und mit einem molekularen Extinktionskoeffizienten bei der Wellenlänge des Absorptionsmaximums von 5.000 bis 50.000 an ein Bindemittel und/oder ein Härtungsmittel;
(2) Bestimmen des Wertes von $\tau$, der durch die beabsichtigte Verwendung des Beschichtungsfilms erforderlich ist;
(3) Bestimmen des erforderlichen Werts von d, der Dicke (cm) des trockenen Beschichtungsfilms, bei dessen Verwendung;
(4) Bestimmen der Konzentration C (mol/l) der funktionellen Gruppe der im Ultraviolettbereich absorbierenden Verbindung, die in dem trockenen Beschichtungsfilm vorhanden sein soll, unter Verwendung des Ausdrucks

$$\epsilon dC \geq 129 \cdot \log \tau - 367$$

worin $\varepsilon$ der molekulare Extinktionskoeffizient der funktionellen Gruppe in dem trockenen Beschichtungsfilm ist, $\tau$ ein wie in Stufe (2) bestimmter Wert ist und d ein wie in Stufe (3) bestimmter Wert ist;
(5) Herstellen eines witterungsbeständigen Beschichtungsmaterials, das das Bindemittel und das Härtungsmittel als Hauptbestandteile umfasst und das Produkt von Stufe (1) in einer Menge zur Bereitstellung des Wertes von C, der in Stufe (4) bestimmt wurde, umfasst; und

(6) Beschichten eines Gegenstands mit dem Beschichtungsmaterial und Trocknen des Beschichtungsmaterials derart, dass ein trockener Beschichtungsfilm der Dicke d produziert wird.

**2.** Verfahren nach Anspruch 1, wobei das Bindemittel, an das die im Ultraviolettbereich absorbierende Verbindung gebunden ist, ein Harz ist, das durch Copolymerisation einer im Ultraviolettbereich absorbierenden Verbindung, die eine polymerisierbare Vinylgruppe aufweist, mit einem Monomer, das eine polymerisierbare Vinylgruppe aufweist, erhältlich ist.

**3.** Verfahren nach Anspruch 1 oder 2, wobei das Härtungsmittel, an das die im Ultraviolettbereich absorbierende Verbindung gebunden ist, ein Härtungsmittel ist, das eine restliche Isocyanatgruppen enthaltende Isocyanatverbindung, die durch Reaktion einer im Ultraviolettbereich absorbierenden Verbindung, die aktiven Wasserstoff aufweist, mit einem Teil der Isocyanatgruppen eines Isocyanatprepolymers und/oder -monomers mit mindestens zwei freien Isocyanatgruppen erhältlich ist, umfasst und ferner entsprechend der Notwendigkeit ein Isocyanatprepolymer umfasst.

**4.** Verfahren nach einem der vorhergehenden Ansprüche, wobei die im Ultraviolettbereich absorbierende Verbindung mindestens eine Verbindung ist, die aus der aus Verbindungen des Benzotriazoltyps und Verbindungen des Benzophenontyps bestehenden Gruppe ausgewählt ist.

**5.** Verfahren nach einem der vorhergehenden Ansprüche, wobei der Gegenstand aus Kunststoffformteilen, Haushaltselektrogeräten, Metallwaren, Kraftfahrzeugen, Luftverkehrszeugen, Baumaterialien, Sporteinrichtungen, Bauten und Baubeschlägen und Holzgegenständen ausgewählt ist.

**Revendications**

**1.** Procédé de production d'un film de revêtement résistant aux intempéries possédant un maintien du brillant d'au moins 80 % pendant au moins $\tau$ heures dans un essai d'exposition accélérée aux agents atmosphériques au moyen d'un appareil weather-O-meter par arc à charbon Sunshine, où $\tau$ vaut au moins 1000 heures, le procédé comprenant les étapes qui consistent à :

(1) lier chimiquement à l'un ou l'autre ou à chacun d'un liant et d'un agent de durcissement, un composé absorbant l'ultraviolet possédant la valeur maximale de son spectre d'absorption de lumière dans une région de longueur d'onde plus courte que 380 nm et possédant un coefficient d'extinction moléculaire à la longueur d'onde maximale d'absorption de 5000 à 50.000 ;
(2) déterminer la valeur de $\tau$ requise par l'usage recherché du film de revêtement ;
(3) déterminer la valeur requise de d, l'épaisseur (cm) du film de revêtement sec lorsqu'il est en usage ;
(4) déterminer la concentration C (mol/L) du groupe fonctionnel du composé absorbant l'ultraviolet qui doit être présente dans le film de revêtement sec en utilisant l'expression

$$\varepsilon dC \geqq 129 \cdot \log \tau - 367$$

dans laquelle $\varepsilon$ est le coefficient d'extinction moléculaire du groupe fonctionnel dans le film de revêtement sec, $\tau$ est tel que déterminé dans l'étape (2) et d est tel que déterminé dans l'étape (3) ;
(5) préparer un matériau de revêtement résistant aux intempéries comprenant le liant et l'agent de durcissement à titre de constituants principaux et comprenant le produit de l'étape (1) en une quantité qui permette de fournir la valeur de C déterminée dans l'étape (4) et
(6) recouvrir un article avec le matériau de revêtement et sécher le matériau de revêtement afin de produire un film de revêtement sec d'épaisseur d.

**2.** Procédé selon la revendication 1, dans lequel le liant auquel on a lié le composé absorbant l'ultraviolet est une résine que l'on obtient en copolymérisant un composé absorbant l'ultraviolet possédant un groupe vinylique polymérisable avec un monomère possédant un groupe vinylique polymérisable.

**3.** Procédé selon la revendication 1 ou 2, dans lequel l'agent de durcissement auquel on a lié le composé absorbant l'ultraviolet est un agent de durcissement qui comprend un composé isocyanate contenant des groupes isocyanate résiduels que l'on obtient par réaction d'un composé absorbant l'ultraviolet possédant un hydrogène actif avec une partie des groupes isocyanate d'un monomère et/ou prépolymère d'isocyanate possédant au moins deux groupes isocyanate libres, et qui comprend en outre, selon les nécessités, un prépolymère d'isocyanate.

4. Procédé selon l'une quelconque des revendications précédentes, dans lequel le composé absorbant l'ultraviolet est au moins un composé choisi dans le groupe comprenant les composés de type benzotriazole et les composés de type benzophénone.

5. Procédé selon l'une quelconque des revendications précédentes, dans lequel l'article est choisi parmi des articles moulés en plastique, des appareils électriques domestiques, des articles en métal, des automobiles, des aéroplanes, des matériaux de construction, des équipements sportifs, des constructions et des garnitures de construction et des articles en bois.

# FIG. 1

## ULTRAVIOLET TRANSMITTANCE OF EACH COATING FILM

ULTRAVIOLET TRANSMITTANCE

COMPARATIVE EXAMPLE
EXAMPLE

# FIG. 2

## ABSORPTION SPECTRUM OF FUNCTIONAL GROUP RESIDUE HAVING ULTRAVIOLET ABSORBING ABILITY

UV SPECTRUM OF UVA MONOMER AND UVA POLYMER

UVA POLYMER
UVA MONOMER

# FIG. 3

AMOUNT OF FUNCTIONAL GROUP OF ULTRAVIOLET
ABSORPTIVE COMPOUND VS. ABSORBANCE

FIG. 5

RELATION BETWEEN FUNCTIONAL GROUP
CONCENTRATION AND GLOSS RETENTION
AND GLOSS RETENTION

AMOUNT OF FUNCTIONAL GROUP OF ULTRAVIOLET
ABSORPTIVE COMPOUND VS. GLOSS RETENTION
AFTER 2500HR OF ACCELERATION

FIG. 4

RELATION BETWEEN ABSORBANCE AND
GLOSS RETENTION

ABSORBANCE VS. GLOSS RETENTION
AFTER 2500 HR OF ACCELERATION

# FIG. 6

ABSORBANCE VS. GLOSS RETENTION

◆ 1200 HR ACCELERATION
■ 1800 HR ACCELERATION
▲ 2500 HR ACCELERATION

# FIG. 7

AMOUNT OF UVA IN COATING FILM VS. GLOSS RETENTION

◆ 1200 HR ACCELERATION
■ 1800 HR ACCELERATION
▲ 2500 HR ACCELERATION

EP 1 207 174 B1

# FIG. 8

## ABSORBANCE VS. WEATHER RESISTANCE

ACCELERATION TIME TILL GLOSS RETENTION REACHES 80% (HR)

# FIG. 9

RELATION BETWEEN $\varepsilon$ dc log $\tau$